Europäisches Patentamt

(19) European Patent Office

Office européen des brevets

(11) Numéro de publication: **0 028 565**
**A1**

(12) **DEMANDE DE BREVET EUROPEEN**

(21) Numéro de dépôt: **80401530.3**

(22) Date de dépôt: **29.10.80**

(51) Int. Cl.³: **D 01 G 11/02**

(30) Priorité: **06.11.79 FR 7927522**

(43) Date de publication de la demande:
**13.05.81 Bulletin 81/19**

(84) Etats Contractants Désignés:
**BE DE GB IT**

(71) Demandeur: **Saint Avit, Jean Henri Marcel**
**Laouarde**
**F-32190 Vic Fezensac(FR)**

(71) Demandeur: **Foures, Jean Joseph Guillaume**
**Laouarde**
**F-32190 Vic Fezensac(FR)**

(72) Inventeur: **Saint Avit, Jean Henri Marcel**
**Laouarde**
**F-32190 Vic Fezensac(FR)**

(72) Inventeur: **Foures, Jean Joseph Guillaume**
**Laouarde**
**F-32190 Vic Fezensac(FR)**

(74) Mandataire: **Ravina, Bernard**
**44, avenue Léon Blum**
**F-31500 Toulouse(FR)**

(54) **Machine à détordre les torons de fibres, ou fils.**

(57) La présente invention a pour objet une machine à détordre les torons de fibres pour obtenir des rubans de fibres parallèles susceptibles d'être utilisés ou réutilisés pour la confection de torons neufs ou d'autres produits.

La machine selon l'invention comprend au moins un dispositif d'alimentation (1) en torons (8) avec moyens de préhension (17) délivrant les torons un à un à un dispositif de détection (2) des défauts, associé à un dispositif (41) d'éjection des torons défaillants, au moins une tête de détorsion (3) des torons, au moins une carde (4) de peignage des rubans de fibres obtenus après détorsion et au moins un organe d'évacuation (5) des rubans de fibres.

La machine selon l'invention est particulièrement adaptée à la détorsion des torons ou ficelles de sisal, mais peut être également utilisée pour la détorsion de tous types de torons de fibres.

EP 0 028 565 A1

./...

Fig 1

MACHINE A DETORDRE LES TORONS DE FIBRES, OU FILS.

La présente invention a pour objet une machine à détordre les torons de fibles ou fils tels des ficelles ou autres pour obtenir des rubans de fibres parallèles susceptibles d'être utilisés ou réutilisés pour la confection de torons ; tels des ficelles ou autres produits à partir de fibres.
On entend par torons les cordages ou fils composés par torsion de plusieurs fibres.

Il est connu de détordre des torons ou fils de fibres en faisant passer les dits torons dans une tête de détorsion entre des rouleaux tangents horizontaux rotatifs en sens inverse l'un de l'autre suivant leur axe et entraînés en rotation suivant un axe vertical et suivant un pas correspondant au pas de torsion du toron. Cette opération est particulièrement necessaire lorsque les fibres livrées sous forme de torons plus ou moins serrés doivent être séparées pour être travaillées.
Il est apparu en outre que par détorsion il était possible de récupérer les ficelles de liage généralement en sisal, telles que celles dont il est utilisé une grande quantité dans l'agriculture et qui après usage sont généralement jetées ou détruites, ce qui constitue une perte importante de matière première importée.
La détorsion des torons telles des ficelles de sisal soulève, pour parvenir à l'obtention d'un ruban ou d'un boudin de fibres séparées parallèles susceptibles d'être utilisées ou réutilisées pour la confection de ficelles neuves ou d'autres articles à base de fibres, un certain nombre de problèmes qui n'ont pas été résolus à ce jour.

D'une part, lorsqu'elles ont été utilisées par le liage, ces ficelles présentent au moins un noeud qui s'oppose à la détorsion par les rouleaux.
Ce noeud doit être coupé préalablement à la détorsion, cependant dans une gerbe de ficelles il peut arriver que certains noeuds ne soit pas détectés, ce qui interdit la détorsion en continu et est dangeureux pour la machine.
D'autre part, il est indispensable que les torons ou ficelles soient détordus un à un pour éviter un phénomène de rétorsion des fibres de l'une avec les fibres de l'autre lors du passage dans la tête de détorsion.

Enfin, il a été constaté qu'après détorsion, en supposant l'absence de noeuds et l'absence de doubles qui s'opposeraient à une détorsion en continu des ficelles les unes après les autres, les rubans de fibres obtenus ont tendance à se retordre.

Or il est necessaire pour leur réutilisation que les fibres soient parfaitement détordues, séparées et parallèles.

La présente invention vise à réaliser une machine à détordre des torons de fibres tels des ficelles et qui solutionne les problèmes énoncés ci-dessus en sorte que la détorsion des ficelles s'effectue une à une en continu sans interruption du fait de la présence de doubles ou de noeuds ou autres défauts et qui permette d'obtenir à partir de chaque ficelle un ruban de fibres détordues séparées et parallèles susceptibles d'être utilisé pour la confection d'autres ficelles ou autres produits à base de fibres.

A cet effet, la machine à détordre les torons de fibres tels des ficelles ou autres pour obtenir des rubans de fibres parallèles susceptibles d'être utilisés ou réutilisés pour la confection de torons tels des ficelles ou autres produits à partir de fibres se caractérise essentiellement en ce qu'elle comprend en amont au moins un dispositif d'alimentation en torons ou fils à partir d'une réserve, doté de moyens de préhension des torons un à un et de délivrance des dits torons un à un à un dispositif de détection des défauts d'alimentation, tels que par exemple surépaisseurs et neouds, sur chacun des torons délivrés, au moins un dispositif associé au détecteur de défaut d'éjection des torons présentant des défauts, au moins une tête de détorsion recevant, après leur passage dans le dispositif de détection les torons un à un et procédant à leur détorsion au fur et à mesure de leur défilement et au moins une carde de peignage des rubans de fibres obtenus par détorsion au fur et à mesure de leur sortie de la tête de détorsion, la dite carde étant dotée de moyens de délivrance des rubans de fibres obtenus par le peignage sur un receptacle et/ou sur un dispositif convoyeur susceptible de desservir un ou plusieurs ensembles de détorsion selon l'invention en sorte que par assemblage des rubans sur le dit convoyeur soit constitué un boudin de fibres distinctes, les dits dispositifs d'alimentation, de détection des defauts, d'éjection des torons défectueux et la tête de détorsion étant dotés de moyens de traction des torons tout au long de leur défilement et étant dotés de moyens de synchronisation pour traiter un à un les torons au fur et à mesure de l'alimentation à partir de la réserve.

La machine selon l'invention permet donc de supprimer les inconvénients énoncés plus haut en évitant les irrégularités de détorsion résultant des noeuds ou des doubles tout en fonctionnant de manière continue.

Suivant une autre caractéristique de l'invention, le dispositif d'alimentation en torons à partir d'une réserve d'où dépassent les extrémités des torons groupés en une gerbe comprend au moins un organe rotatif en plan vertical sous la dite réserve par des moyens appropriés et dotés de au moins une pince radiale à fermeture commandée lors du passage à travers les extrémités des torons dépassant de la réserve pour en appréhender un et à ouverture commandée lors du passage de l'extrémité du toron appréhendé au niveau du dispositif de détection des défauts dans lequel le dit toron libéré est entraîné par des rouleaux tangents du dit dispositif.

Suivant encore une autre caractéristique de l'invention, le dispositif de détection des défauts comprend un détecteur d'épaisseur constitué de deux corps disposés respectivement de part et d'autre du défilement du toron de section complémentaire commandés en rapprochement momentané l'un contre l'autre suivant leurs sections qui présentent lors de leur contact un intervale de la valeur de l'épaisseur d'un toron et un détecteur de noeuds constitué par deux organes rotatifs tangents entre lesquels défile le toron l'un au moins d'entre eux étant mobile transversallement au sens de défilement et susceptible de s'écarter de l'autre lors du passage d'un noeud, les dits détecteurs étant accouplés à un

. 4 .

0028565

dispositif d'éjection commandé par la perception du défaut en sorte que le toron défectueux soit éjecté hors du circuit de manière automatique et sans intervention du personnel de conduite de la machine.

D'autres avantages et caractéristiques de l'invention apparaîtront à la lecture de la description, ci-après d'un exemple de réalisation donné à titre d'exemple non limitatif illustré par les dessins joints dans lesquels :

- La figure 1 est une vue schématique de l'ensemble de la machine.

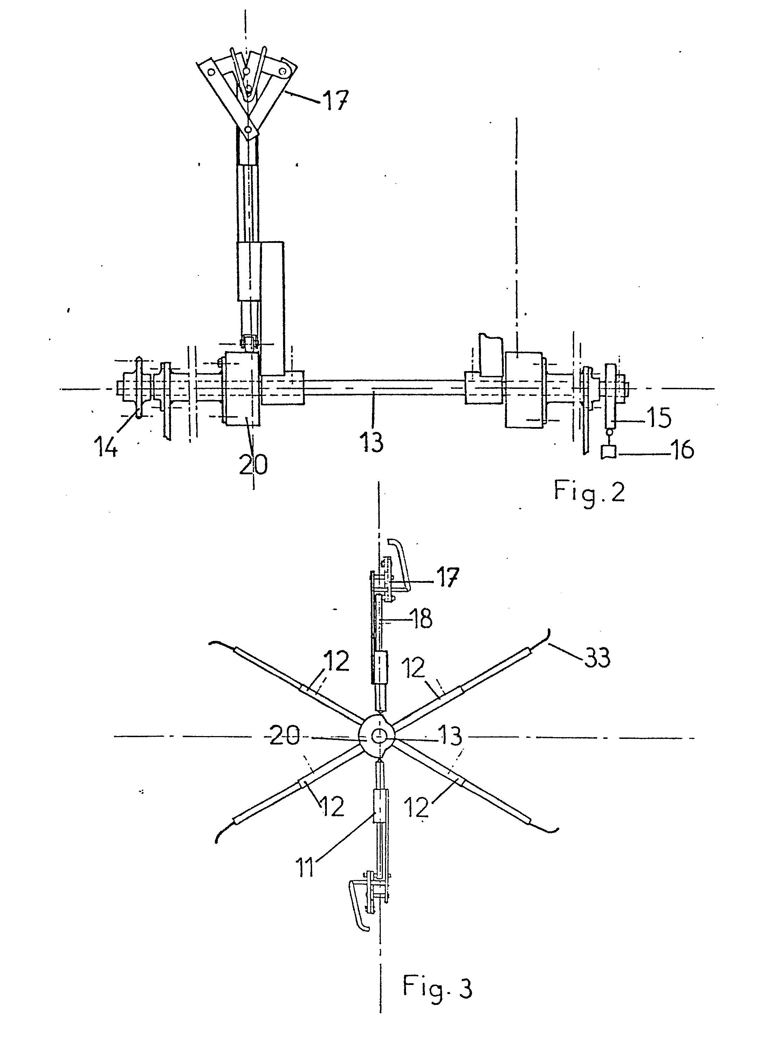

- Les figures 2 à 4 sont des vues du dispositif d'alimentation et de ses éléments.
- La figure 5 est une vue du détecteur de défauts.
- Les figures 6.7.8. et 9 sont des vues partielles du détecteur de défauts.
- Les figures 10.11.et 12 sont des vues de la tête de détorsion
- La figure 13 est une vue schématique de la carde.
- Les figures 14 et 15 sont des vues des peignes de la carde.

Telle que représentée schématiquement suivant une vue de principe la machine selon l'invention comporte un ensemble de détorsion disposé suivant un axe vertical AA' défini comme étant le sens de défilement des torons comprenant au moins un dispositif d'alimentation en torons à partir d'une réserve, référencé génériquement par 1, au moins un dispositif détecteur des défauts d'alimentation référencé génériquement par 2, au moins une tête de détorsion référencée par 3, au moins une carde 4, un dispositif convoyeur 5 de préférence mais non limitativement horizontal et en bout du dit convoyeur, une carde de finition 6 de l'ensemble des rubans obtenus à partir des torons.

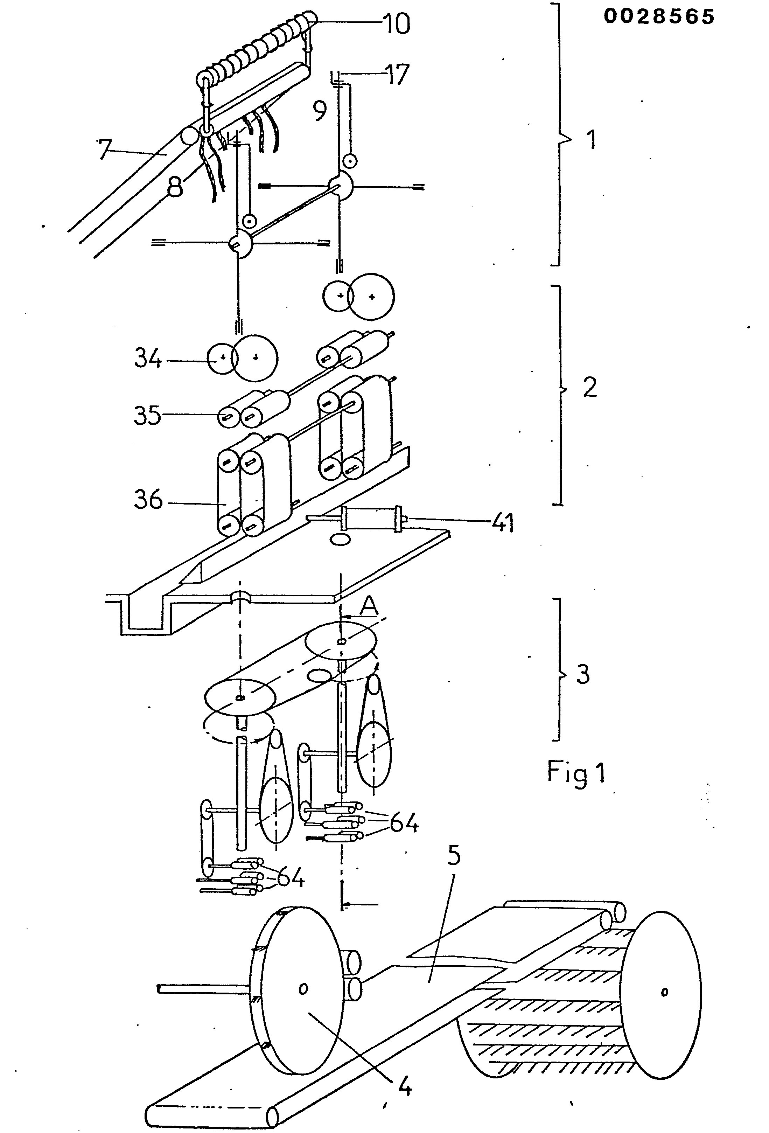

En figure 1 sont représentés sous chacune des références 1.2.3. deux dispositifs d'alimentation, de détection, deux têtes de détorsion pour une carde 4 et un convoyeur 5 ce qui permet d'utiliser au maximum la capacité de la carde et comme il sera décrit plus avant de regrouper dès le cardage deux rubans de fibres obtenus par détorsion mais il va de soi que la machine selon l'invention peut comprendre autant d'ensemble 1.2.3.4. qu'il sera
jugé necessaire.


Le dispositif d'alimentation 1 comprend au moins une réserve 7
de torons ou ficelles 8 constitué par une glissière inclinée sur
laquelle sont poussée par tous moyens connus des gerbes de ficelles en sorte que l'extrémité de chaque gerbe pende hors de la
glissière sur une certaine longueur.

De préférence la gerbe est bloquée en position par tout dispositif connu qui peut être comme représenté schématiquement en figure 1 un rouleau presseur 9 coopérant avec un ressort 10 pour tenir la gerbe contre le bord supérieur de la glissière.

Sous la réserve telle que définie est monté sur un bâti au moins
un organe 11 rotatif en plan vertical coopérant avec des organes
d'actionnement en rotation doté de au moins une pince radiale à
fermeture commandée lors du passage à travers les extrémités des
torons dépassant de la réserve pour appréhender un toron et à
ouverture commandée lors du passage de la dite pince au niveau du
dispositif de détection des défauts dans lequel le toron est entraîné par des rouleaux du dit dispositif.


Comme représenté l'organe rotatif 11 en plan vertical est constitué par un tourniquet à six branches radiales 12 porté par un axe
horizontal 13 en bout duquel est calé un pignon 14 en relation
par une transmission avec un organe moteur, le sens de rotation
étant matérialisé par la flèche de la figure 1.

Sur l'autre extrémité de l'axe 13 est monté une came 15 coopérant
comme il sera énoncé plus avant avec un contacteur 16.

La gerbe de torons portée en bout de la réserve dépasse celle-ci
d'une longueur inférieure et/ou plus égale à celle des branches
du tourniquet.

Au moins l'une des branches 12 est dotée à son extrémité d'une
pince 17 commandée par un arbre 18 parallèle au bras et à l'extrémité inférieure duquel est monté un galet 19 faisant rotation sur
une came semi circulaire 20 calée sur un manchon de l'axe 13.

Sur l'arbre 18 est monté un organe élastique 21 de rappel en position arrière d'ouverture de la pince.

La came est calée de telle manière que lorsque le galet vient en contact avec elle, la branche étant en position verticale haute sous et/ou au milieu des extrémités des torons pendants de la réserve, la pince se ferme en appréhendant un toron qui par rotation du tourniquet sera tiré de la gerbe et que lorsque la branche vient en position verticale basse, la pince étant au dessus du dispositif détecteur le galet quitte la came ce qui détermine l'ouverture de la pince en sorte que le toron soit happé par les rouleaux tangents du dispositif de détection qui sont actionnés par une transmission en sens contraire l'un de l'autre matérialisé par les flèches en figure 1.

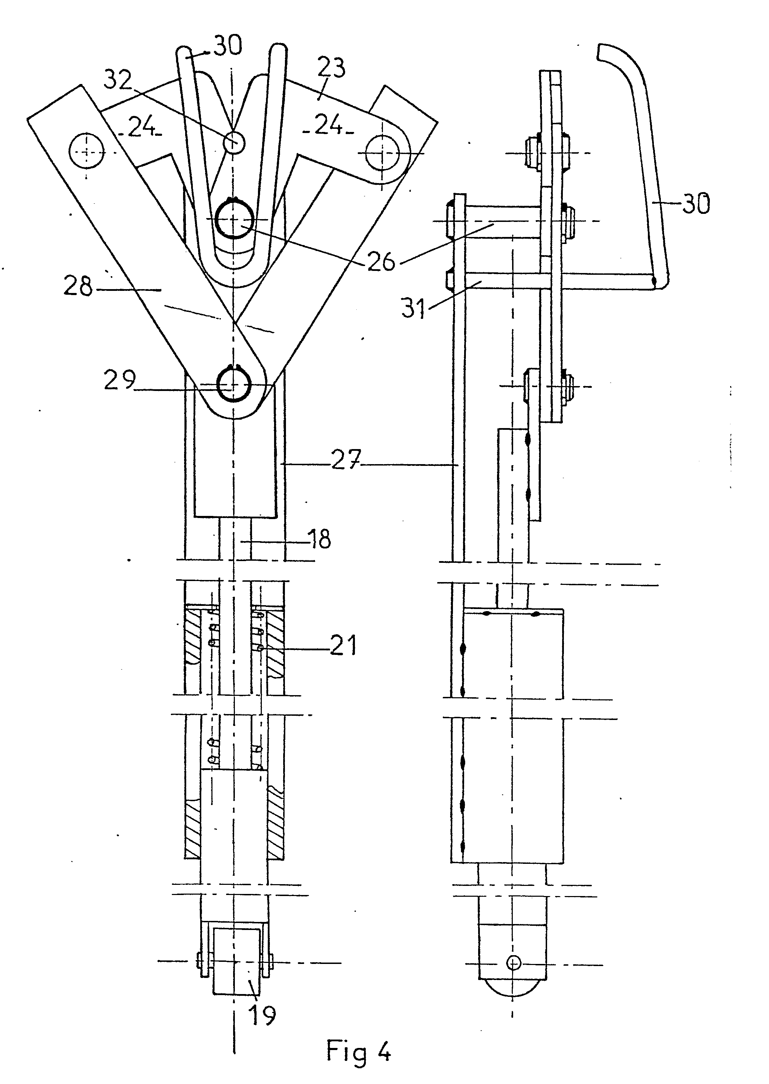

Suivant une forme préférée de réalisation de l'invention représentée en vue de dessus et en vue en coupe en position fermée en figure 4, les pinces sont constituées de deux mors 23 présentant respectivement deux branches 24 et 25 à angle droit susceptibles de se rapprocher les unes des autres autour d'un point fixe d'articulation matérialisé par un pion 26 fixé sur une tôle 27 parallèle à l'arbre 18 et sous celui-ci et fixé au boîtier de l'organe 21 de rappel de l'arbre 18.

Les dits mors sont commandés en rapprochement ou en éloignement par deux biellettes 28 articulées à chacune des extrémités des branches 25 des dits mors et sur un même axe 29 transversal à leur extrémité et à une patte de l'arbre 18 ou à l'arbre 18 lui-même.

Lorsque le galet 19 monté rotatif en bout de l'arbre 18 passe sur la came 20 il pousse l'arbre 18 vers le haut et ferme la pince. Sous la pince telle que décrite et sur son côté d'attaque de la gerbe de torons suivant le sens de rotation est montée une fourche 30 portée par un pion 31 solidaire de la tôle 27 et transversal à la pince dont les deux branches en V dépassent la pince et sont recourbées vers celle-ci c'est-à-dire vers l'arrière par rapport au sens de rotation.

L'écartement des branches de la fourche est sensiblement égal ou voisin de celui des mors de la pince en position d'ouverture en sorte que la fourche écarte de part et d'autre de la pince les torons pour limiter le nombre de torons susceptibles d'être appréhendés par la pince.

Le bord interne de chacune des branches 24 des mors de la pince présente au niveau où les dites branches se croisent en fermeture une encoche 32 par exemple en arc de cercle dont le rayon est sensiblement inférieur à la section des torons à appréhender en sorte que lors de la fermeture de la pince un seul toron soit pris après défilement entre les mors dans l'oeil formé par la jonction des deux encoches et que les autres glissent entre les mors.

A cet effet, l'amplitude d'ouverture des mors est, en fond de pince au niveau de la superposition des dits mors,voisine de la section d'un toron à appréhender.

L'extrémité de chacune des autres branches du tourniquet est dotée d'une fourche en V 33 dont les pointes sont recourbées en sens opposé au sens de rotation du dit tourniquet.

Ces fourches ont pour fonction d'une part de tenir le toron lorsqu'il a été appréhendé par la fourche et que celle-ci le tire par la rotation du tourniquet et d'autre part de brasser les torons qui pendent de la gerbe.

A cet effet, les fourches peuvent être disposées respectivement de part et d'autre du plan de rotation du tourniquet.    -

Selon une forme préférée de réalisation sur un même diamètre du tourniquet sont montées deux pinces en opposition.

En figure 1 est représenté schématiquement le dispositif de détection des défauts comprenant un détecteur de surépaisseur 34 un jeu de rouleaux tracteurs 35 et un détecteur de noeuds 36 constitué par deux tapis tangents entraînés en rotation par friction dont un est menant et l'autre mené et dont un est susceptible de s'écarter de l'autre.

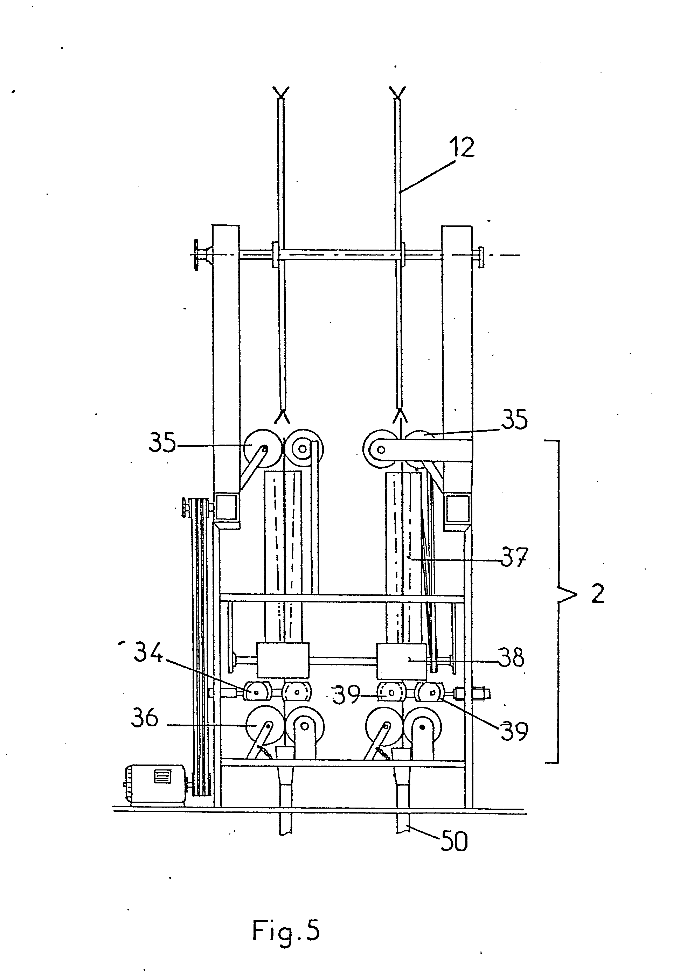

Aux figures 5 à 8 sont représentés selon une forme fonctionnelle les détecteurs 34 et 36.

Lorsque le toron est happé par les rouleaux 35 il défile vers le bas dans la goulotte 37 au fond de laquelle  il est pris par les rouleaux tracteurs 38.

Sous les rouleaux tracteurs 38 est monté le détecteur de surépaisseur constitué par deux corps 39 disposés respectivement de part et d'autre du passage du toron et présentant pour l'un une section en creux et pour l'autre une section en relief ménageant un intervalle de la valeur de l'épaisseur d'un toron.

Au moins un des corps 39 qui présentent une section en arc de cercle est commandé par un piston 40 pneumatique qui le pousse vers l'autre en sorte que sa section en relief pénètre dans la section en creux de l'autre dans lequel défile le toron.

Au cas où le toron a une épaisseur supérieure à la valeur déterminée par l'espacement la pénétration de l'un dans l'autre est incomplète et un contacteur actionne un dispositif éjecteur constitué par un piston 41 commandé par tout moyen connu qui pousse le toron hors de l'axe de défilement d'où il est évacué par une rampe 42.

Suivant une forme préférée de réalisation non représentée pour simplifier le dessin le toron défile à partir des détecteurs de défauts dans un conduit souple et flexible qui lorsqu'un défaut est enregistré est poussé par le verin latéralement en sorte que le toron débouche en dehors de l'axe de défilement orienté vers la tête de détorsion.

Il va de soi que la vitesse de défilement sous la traction des rouleaux 35 et 38 est coordonnée avec la vitesse d'alimentation à partir du tourniquet et qu'elle est légèrement supérieure à celle-ci pour que le toron soit maintenu en traction.

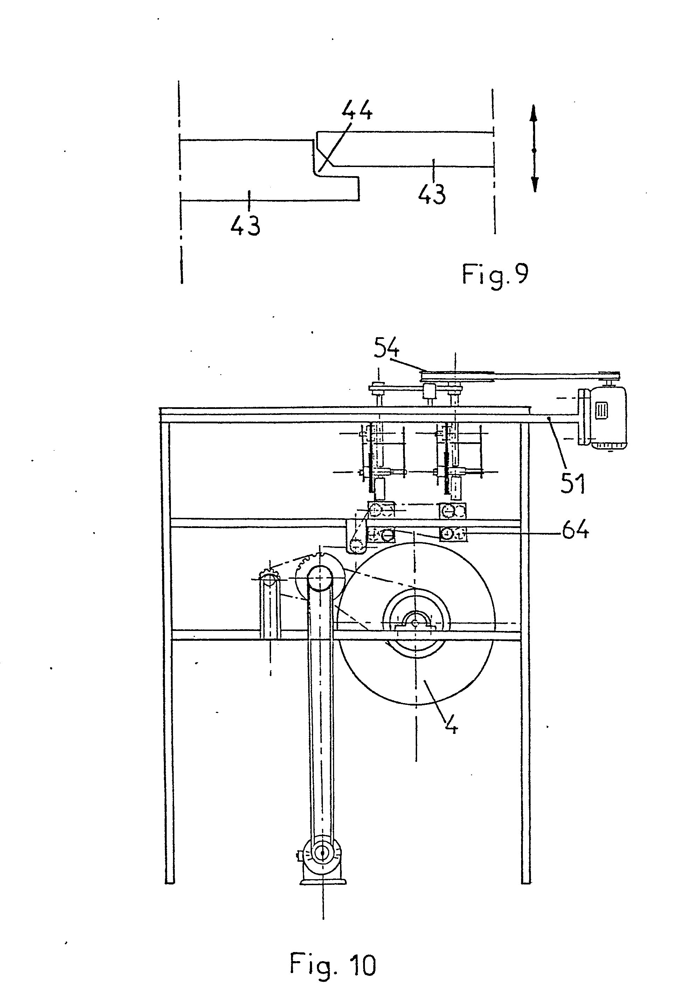

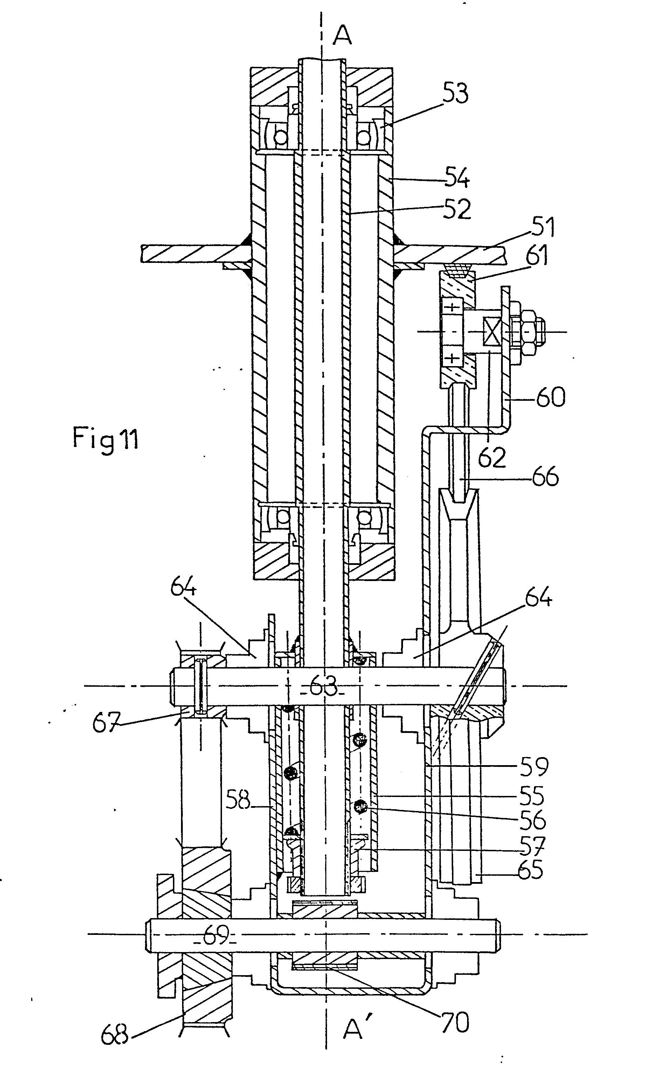

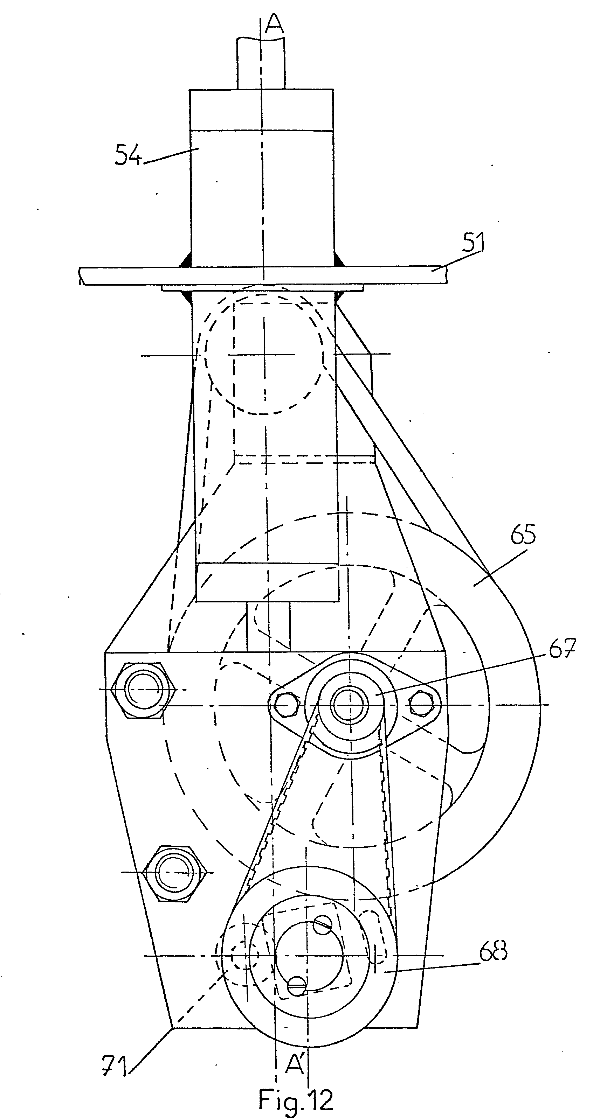

En figure 9 est représenté un autre mode de réalisation du dispositif de détection des surépaisseurs constitué par deux galets 43 mobiles l'un vers l'autre transversalement dont un présente un chanfrein 44 en sorte que lors de leur jonction soit ménagé un intervalle de la valeur de la section d'un toron.

Le dispositif de détection des doubles est commandé en mouvement instantané en liaison avec l'alimentation par la came 15 et le contacteur 16 du tourniquet d'alimentation.

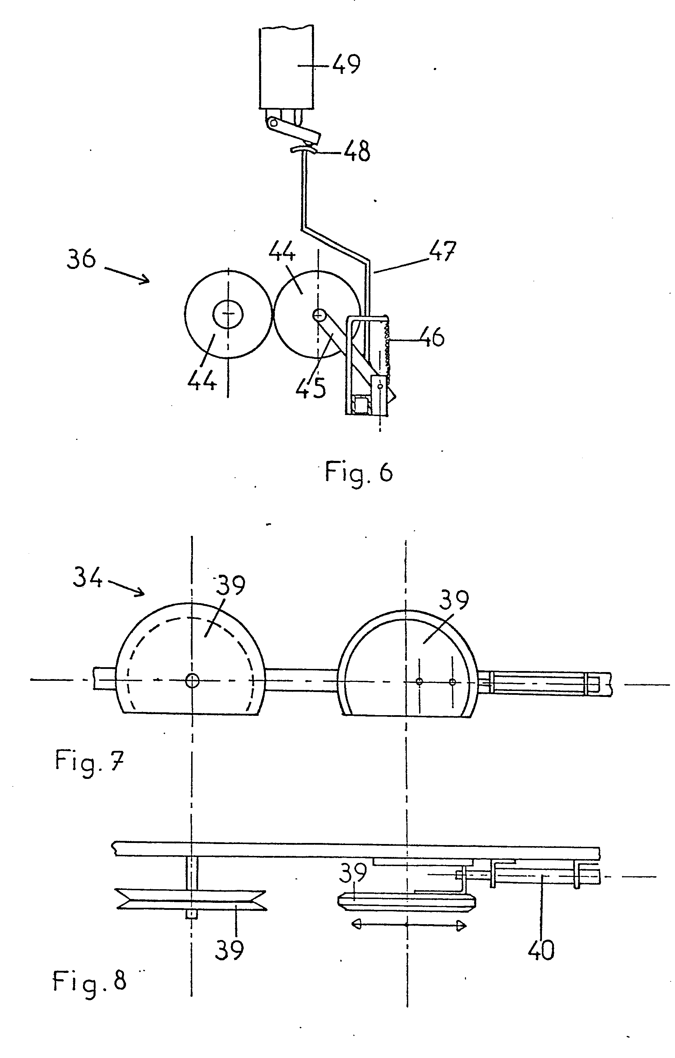

Le dispositif de détection des neouds représenté en figure 6 comprend deux rouleaux tangents 44 actionnés par une transmission connue dont un est monté basculant sur un levier 45 doté d'un organe élastique de rappel 46 qui actionne un levier 47 doté d'un secteur 48 sur lequel appuie le galet d'un contacteur 49.

Lors du défilement d'un toron si celui-ci présente un noeud le rouleau 44 s'écarte et libère le contacteur 49 qui commande le dispositif d'éjection comme énoncé plus haut.

De ce fait, seuls les torons simples et sans noeuds peuvent parvenir à la tête de détorsion par l'intermédiaire du conduit 50 disposé suivant l'axe de défilement sous le dit dispositif de détection.

La tête de détorsion représentée en figures 10.11.12, est montée rotative sous une table horizontale 51.

De préférence selon une forme de réalisation non représentée pour simplifier le dessin, la table est constituée d'éléments modulaires amovibles dont chacun reçoit une tête ce qui facilite l'interchangeabilité des dites têtes.

La tête comprend un arbre creux 52 dans lequel défile le toron. L'arbre creux 52 est monté rotatif par des paliers inférieurs et supérieurs à roulement 53 dans un fourreau cylindrique 54, soudé transversallement à la table 51, ou à l'élément modulaire la constituant.

Sous le fourreau 54 est monté coaxialement à l'arbre creux 52 un boitier carré 55 avec ressort 56 coopérant avec l'arbre creux rotatif pour bloquer le boitier carré en compression contre un épaulement 57 inférieur à l'axe creux afin d'assurer la transmission du mouvement et de régler la pression de contact de la tête sur la table horizontale 51.

Il va de soi que tout autre système de blocage rigide, par goupille par exemple peut être utilisé.

Un des côtés du boîtier carré 55 avec ressort 56 est soudé sur l'aile 58 d'une chape en U debout, dont le fond 59 est doté d'une perforation cylindrique en regard de l'orifice de l'arbre creux 52 et dont l'autre aile 59 vient de l'autre côté du boitier carré 53.

L'extrémité supérieure 60 de l'aile 59 est déportée vers l'extérieur par rapport à l'axe de la chape suivant un double pliage à angle droit.

Un premier système de poulies est monté sur l'aile 59.

Il comprend une poulie de petit diamètre 61 du type à gorge montée tourillonnante sur un arbre 62 perpendiculaire à l'extrémité 60 de l'aile 59 de la chape à l'intérieur de celle-ci.

La poulie 61 est réglable en position sur son arbre 62 par rapport à l'aile 60 par tous moyens connus pour les raisons qui seront énoncées plus avant.

Dans le plan de la poulie 61 est montée sur un arbre 63 transversal à la chape tourillonnant dans des paliers 64 et déportée latéralement à l'arbre creux 52 une poulie à gorge de grand diamètre 65 coopérant avec la poulie 61 de petit diamètre au moyen d'une courroie de préférence trapézoïdale 66.

La hauteur de la courroie 66 est supérieure à la profondeur de la gorge de la poulie 61 en sorte que la courroie dépasse la dite gorge et la poulie 61 est montée sur l'extrémité 60 de la chape et sous la table 51 à une distance inférieure et/ou plus égale à la hauteur de la courroie au dessus de la gorge en sorte que la courroie fait friction contre la table.

De l'autre côté de la chape parallèlement à son aile 58 est monté un deuxième jeu de poulies qui sont de préférence des poulies crantées dont une 67 est calée en bout de l'arbre 63 et est entraînée par rotation de la poulie 65 comme il sera décrit plus avant et dont l'autre 68 disposée dans le plan de la poulie 67 est calée en bout d'un arbre 69 transversal à la chape porteur d'un rouleau emmanché 70 en un matériau souple qui entraîne par friction un autre rouleau 70 en un matériau souple tangent au précédent et porté par un arbre 71 rotatif dans des paliers parallèlement au précédent.

Les rouleaux en matériaux souples sont tangents sous le débouché de l'arbre creux 52.

En tête de l'arbre creux 52 est calée une poulie horizontale 72 coopérant par une courroie avec un moteur électrique non représenté.

Par rotation de l'arbre 52 la poulie 66 fait friction sous la table 51 suivant une piste circulaire et entraîne par la poulie 65 et le jeu de poulies 67, 68 les rouleaux 70 en rotation conjointement à la rotation de la tête telle que définie.

Le système de réduction obtenu par les poulies 61, 65 et 67, 68 permet d'obtenir une vitesse de rotation de la tête en accord avec le pas de torsion et donc de détorsion des torons à partir d'une piste circulaire de friction de la courroie 66 sous la table 51 de diamètre suffisant pour éviter une usure prématurée de la courroie 66.

Par réglage de la position de calage de la poulie 61 sur son arbre 62 et de la poulie 65 il est possible de régler la rotation de la tête en fonction du pas de torsion des torons.

La tête peut ainsi utiliser une piste de rotation de diamètre variable sous la table 51.

A la sortie de l'arbre creux 52 sont montés de toute manière connue une paire de rouleaux tracteurs (fig.10).

Comme représenté à la figure 10, il est possible d'entraîner au moins deux têtes de détorsion conjointement.

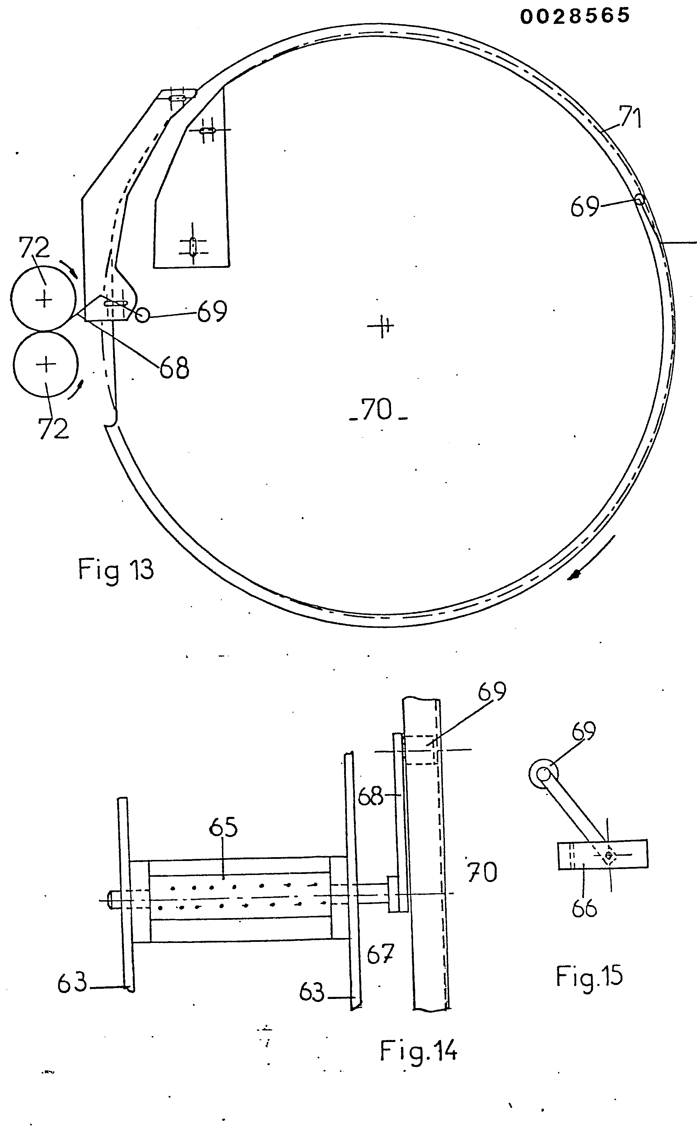

Sous la ou les têtes de détorsion est montée sur le bâti de la machine une carde rotative 71 (figure 10) circulaire dont les composants sont représentés en vue schématique et partielle aux figures 13 et 14.

Le développement de la carde circulaire correspond à la longueur des rubans de fibres détordues à carder et est de préférence légèrement supérieur à celle-ci.

La carde est constituée de deux flancs en tôle 72 de forme circulaire coaxiaux disposés verticalement sous les rouleaux tracteurs de la tête de détorsion sur un axe d'entraînement en rotation (fig.10) par tous moyens connus.

Entre les flancs 72 et sur le pourtour de ceux-ci sont disposés des peignes 73 régulièrement espacés perpendiculairement aux flancs 72.

Chacun des peignes est constitué d'une barette 74 transversale aux flancs dotés d'un axe transversal 75 rotatif dans des orifices de chacun des flancs et dont une extrémité fait saillie au-delà de l'un des flancs.

Il va de soi que la fixation de l'axe 75 qui n'est pas représentée pour simplifier le dessin de la figure 14 est réalisé de toute manière connue de l'homme de l'art pour permettre la rotation du dit axe en empêchant un déplacement longitudinal de celui-ci.

En bout de l'extrémité de l'axe 75 qui dépasse le flanc 72 est calé un levier perpendiculaire 76 incliné vers le bas par rapport à l'axe 75 et à la barette en un bout duquel est monté, du côté extérieur opposé à la carde, un galet rotatif 77.

Parallèlement à la carde est montée sur le bâti une flasque circulaire 78 fixe de même diamètre que la carde et concentrique à celle-ci.

Sur le pourtour de la carde est monté un chemin de roulement périphérique 79 présentant une section en U horizontale ouvert vers
la carde et avec lequel coopèrent les galets 77 des peignes.

Latéralement à la carde sur un diamètre de celle-ci est montée
une paire de rouleaux tangents 80 dits "dévêtisseurs" entraînés
en rotation en sens contraire l'un de l'autre par tous moyens
connus qui lors du passage du ruban de fibres tiré par la carde
le pincent et l'évacuent.

En regard des rouleaux dévêtisseurs le chemin de roulement 79
est interrompu pour permettre par gravité le basculement des
peignes depuis la position radiale à la carde qu'ils ont lors du
maintien par le galet dans le chemin de roulement jusqu'à une
position tangentielle à la carde en sorte que le ruban de fibres
ne soit plus tenu.

Après la zone d'interruption du chemin de roulement une came 81
avec bossage 82 fait reprendre aux galets leur place dans le chemin de roulement.

Les dents des peignes peuvent être disposées de toute manière
connue, mais de préférence elles sont disposées sur deux rangées
en quinconce.

Sous la carde est monté le dispositif convoyeur 5 qui dessert
les différentes têtes de détorsion et cardes et en bout du dit
convoyeur est disposée la carde de finition 6 de grande largeur.

Il va de soi que la carde 6 est de conception identique à la carde 4.

La machine selon l'invention permet d'obtenir notamment à partir
de ficelles de récupération telles qu'utilisées en agriculture
des rubans de fibres parallèles détordues susceptibles d'être
réutilisées.

Il va de soi que le fonctionnement des différents organes au fur
et à mesure du défilement de chaque toron est synchronisé par
tous moyens mécaniques, électrique, électronique ou pneumatique
connus.

La machine selon l'invention peut recevoir des aménagements et
des variantes dans le domaine des équivalents techniques sans
pour autant sortir du cadre du présent brevet.

REVENDICATIONS :

1. Machine à détordre les torons ou fils de fibres tels des ficelles ou autres pour obtenir des rubans de fibres parallèles détordues susceptibles d'être utilisés ou réutilisés à nouveau pour la confection de torons neufs ou d'autres produits à base de fibres, caractérisée en ce qu'elle comprend en amont au moins un dispositif d'alimentation en torons à partir d'une réserve, doté de moyens de préhension des torons un à un et de délivrance en aval des dits torons un à un, au moins un dispositif en aval du précédent de détection des défauts d'alimentation tels que surépaisseurs et neouds au niveau de chacun des torons délivrés un à un au dit dispositif de détection par le dispositif d'alimentation, au moins un dispositif d'ejection des torons présentant des défauts associé au dispositif de détection des défauts au moins une tête de détorsion recevant un à un les torons après passage dans le dispositif de détection des défauts et au moins une carde de peignage des rubans obtenus après détorsion dotée de moyens de délivrance des rubans de fibres parallèles peignées obtenues sur un receptacle ou un dispositif convoyeur susceptible de desservir un ou plusieurs ensembles de détorsion les dits dispositifs d'alimentation, de détection des défauts et la tête de détorsion étant dotés de moyens de traction des torons et étant synchronisés pour traiter un à un les torons au fur et à mesure de l'alimentation à partir de la réserve.

2. Machine à détordre les torons selon la revendication 1 caractérisée en ce que le dispositif d'alimentation en torons à partir d'une réserve comprend au moins un organe coopérant avec des organes d'actionnement en rotation en plan vertical sous une réserve de torons et doté d'au moins une pince radiale à fermeture commandée lors du passage à travers les extrémités des torons dépassant de la réserve pour en appréhender un et à ouverture commandée lors du passage de la dite pince au niveau du dispositif de détection des défauts dans lequel le toron est entraîné par des rouleaux tracteurs du dit dispositif.

3. Machine à détordre les torons selon la revendication 1 et la revendication 2 caractérisée en ce que l'organe rotatif du dispositif d'alimentation est un tourniquet dont au moins une branche est dotée d'une pince commandée en fermeture par le contact d'un galet poussoir sur une rampe de son axe et en ouverture par interruption de la dite rampe qui permet le retour arrière du galet poussoir.

4. Machine à détordre les torons selon la revendication 1 caractérisée en ce que le dispositif de détection des défauts comprend un détecteur d'épaisseur constitué de deux corps de sections complémentaires disposés respectivement de part et d'autre du toron présentant pour l'un une section en creux et pour l'autre une section en relief correspondante ménageant lors de leur jonction un intervalle de la valeur de l'épaisseur d'un toron et dont au moins un et de préférence les deux coopèrent avec des moyens générateurs d'un mouvement momentané contre l'autre transversalement au toron, le ou les dits dispositifs mobiles étant reliés à un ou des dispositifs d'accouplement à un dispositif d'éjection qui est actionné lorsque l'épaisseur enregistrée par contact des deux corps est supérieure à celle d'un seul toron.

5. Machine à détordre les torons selon la revendication 1 caractérisée en ce que le dispositif de détection des défauts comprend sur le passage de chaque toron délivré par le dispositif d'alimentation un détecteur de noeuds constitué par deux organes rotatifs et tangents d'entraînement du toron dont un est monté élastiquement transversalement au sens de passage du toron et susceptible de s'écarter de l'autre lors du passage d'un noeud le ou les dispositifs étant accouplés au dispositif d'éjection du toron lors de son ou de leur écartement.

6. Machine selon la revendication 1 et les revendications 4 et 5 caractérisée en ce que le dispositif d'éjection est constitué par un verin qui après passage du toron défectueux dans le détecteur d'épaisseur et/ou le détecteur de neouds est actionné transversalement au dit toron pour le pousser hors du circuit.

7. Machine à détordre les torons selon la revendication 1 entraînée en rotation sous la table de détorsion et dont les rouleaux tangents de détorsion sont actionnés par un organe de friction sous la table suivant un chemin circulaire caractérisé en ce que le rayon de l'organe de friction par rapport à son axe est réglable ce qui permet de faire varier le pas de détorsion.

8. Machine selon la revendication 1 caractérisée en ce que deux rouleaux tangents dévêtisseurs sont montés latéralement à la carde et que la carde est dotée de peignes articulés mobiles suivant une position radiale jusqu'à une position tangentielle au niveau des dits rouleaux devêtisseurs pour libérer le ruban de fibres.

0028565

10

17

9

7

8

1

34

2

35

36

41

A

3

Fig 1

64

64

5

4

0028565

Fig. 2

Fig. 3

Fig 4

0028565

Fig.5

Fig. 6

Fig. 7

Fig. 8

0028565

Fig.9

Fig. 10

Fig 11

0028565

A

54

51

65

67

68

71

Fig. 12

0028565

Fig 13

Fig.14

Fig.15

RAPPORT DE RECHERCHE EUROPEENNE

Office européen des brevets

Numéro de la demande

EP 80 40 1530

| Catégorie | Citation du document avec indication, en cas de besoin, des parties pertinentes | Revendication concernée |
|---|---|---|
| A | FR - A - 2 278 801 (FOURES J.J.G. et al.) | |
| A | FR - A - 2 242 490 (VEB WIRK-MASCHINENBAU KARL-MARX-STADT) | |
| A | FR - A - 557 970 (PRIGENT A. et al.) | |
| A | DE - C - 726 398 (RALENKOTTER) | |
| A | DE - C - 261 840 (SPINNEREI-MASCHINENFABRIK SEYDEL & CO.) | |

----

**DOCUMENTS CONSIDERES COMME PERTINENTS**

**CLASSEMENT DE LA DEMANDE (Int. Cl 3)**

D 01 G 11/02

**DOMAINES TECHNIQUES RECHERCHES (Int. Cl. 3)**

D 01 G
D 07 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 17-12-1980 | MUNZER |

OEB Form 1503.1  06.78